# FASCICULE DE BREVET EUROPEEN

(11) **EP 3 377 372 B1**
(45) Date de publication et mention de la délivrance du brevet: **13.05.2020**
(21) Numéro de dépôt: 16805007.8
(22) Date de dépôt: 09.11.2016
(51) Int. Cl.: B60R 5/00, B60R 7/04

(54) **VEHICULE TERRESTRE DE TRANSPORT EN COMMUN, DE TYPE BUS, A LUMINOSITE AMELIOREE.**
LANDFAHRZEUG FÜR ÖFFENTLICHE VERKEHRSMITTEL, WIE EIN BUS, MIT VERBESSERTER HELLIGKEIT
LAND VEHICLE FOR PUBLIC TRANSPORT, SUCH AS A BUS, WITH IMPROVED BRIGHTNESS

(30) Priorité: 16.11.2015 FR 1560971
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077102
(87) Numéro de publication internationale: WO 2017/084930

(56) Documents cités:
- EP-A1- 2 767 422
- FR-A1- 2 306 098
- FR-A1- 2 460 823
- FR-A1- 2 796 606
- US-A1- 2004 228 135
- US-B1- 6 416 116

## Description

La présente invention concerne un véhicule terrestre de transport en commun, de type bus ou tram-bus, dont la luminosité dans l'habitacle est améliorée.

Le domaine de l'invention est le domaine des véhicules terrestres, en particulier des véhicules électriques, de transport en commun, de type bus, car ou tram-bus.

### Etat de la technique

Les habitacles de véhicules de transport en commun, de type bus ou tram, comprennent généralement un ou plusieurs compartiments techniques accessibles depuis l'intérieur dudit habitacle. Ces compartiments techniques peuvent se présenter sous différentes formes. Néanmoins, dans la plupart des cas, ces compartiments techniques se présentent sous la forme de conduits longitudinaux disposés sur une paroi latérale de l'habitacle et plus particulièrement au niveau d'une jonction de la paroi latérale avec la paroi supérieure, autrement dit au niveau d'un coin supérieur de l'habitacle.

Par exemple, le document US 6 416 116 B1 décrit un véhicule terrestre de transport en commun comprenant un habitacle et plusieurs compartiments techniques accessibles depuis ledit habitacle agencés sur/dans la paroi supérieure dudit habitacle et se présentant, chacun, sous la forme d'un conduit longitudinal.

Or, lorsqu'un compartiment technique est disposé au niveau d'un coin supérieur de l'habitacle cela diminue la quantité de lumière entrant dans l'habitacle, car le compartiment technique constitue un obstacle à l'entrée de la lumière extérieure vers l'intérieur de l'habitacle. De ce fait, la plupart des véhicules de transport en commun souffre d'un niveau de luminosité naturelle faible qui doit être compensé par un apport de lumière par éclairage, et ce même en pleine journée.

Cela a pour conséquence une consommation accrue d'énergie électrique au sein de l'habitacle, ce qui a un coût non négligeable. De plus, dans le cas de véhicules électriques, cela diminue l'autonomie du véhicule.

Un but de la présente invention est de remédier à ces inconvénients.

Un autre but de l'invention est de proposer un véhicule dont la luminosité naturelle au sein de l'habitacle peut être améliorée.

Il est aussi un autre but de l'invention de proposer un véhicule dont la consommation électrique est diminuée et/ou dont l'autonomie électrique est augmentée.

### Exposé de l'invention

L'invention permet d'atteindre au moins l'un de ces buts par un véhicule terrestre de transport en commun, en particulier de type bus, selon la revendication 1.

Ainsi, dans le véhicule selon l'invention, le ou les compartiments techniques (ou au moins une partie des compartiments techniques) sont agencés dans/sur la paroi supérieure et non au niveau de la partie haute d'une paroi latérale ou d'une jonction de la paroi latérale avec la paroi supérieure, tel que c'est le cas dans les véhicules de transport en commun connus à ce jour.

Par conséquent, dans le véhicule selon l'invention, il est possible de ne pas occuper la partie supérieure d'au moins une, en particulier de chaque, paroi latérale avec un compartiment technique, cette partie pouvant alors être agencée au moins en partie transparente, ou comporter une ou des vitres, de sorte à laisser passer la lumière naturelle dans l'habitacle. Le niveau de luminosité de l'habitacle est alors amélioré. De plus, le véhicule selon l'invention utilise alors moins de lumière synthétique dans l'habitacle, ce qui diminue sa consommation électrique et augmente l'autonomie du véhicule lorsqu'il s'agit d'un véhicule électrique. De plus, l'ergonomie du véhicule est aussi améliorée pour les utilisateurs, car la lumière naturelle leur est plus bénéfique que la lumière synthétique.

Il est à noter que, selon l'invention, par compartiment technique, on entend un compartiment :
- d'aération,
- d'éclairage,
- d'affichage, et/ou
- de passage de tuyaux ou de câbles électriques.

De plus, par « tram-bus », on entend un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

De manière préférentielle, au moins un, en particulier chaque, compartiment technique supérieur peut être agencé au niveau d'une zone centrale de la paroi supérieure.

Ainsi, l'obstacle que pourraient former ces compartiments techniques au passage de la lumière naturelle vers l'habitacle est diminué, voire annulé.

De plus, la zone centrale de la paroi supérieure constitue une zone adéquate permettant de couvrir, de manière efficace et centralisée, l'ensemble de l'habitacle, lorsque le compartiment technique est un conduit d'aération, d'éclairage ou d'affichage.

Plus encore, la zone centrale se trouve dans une partie de l'habitacle où la hauteur entre le plancher et le plafond de l'habitacle peut être personnalisée plus facilement comparée à d'autres zones de l'habitacle.

Dans une version particulièrement préférée du véhicule selon l'invention, au moins un, en particulier chaque, compartiment technique supérieur peut se présenter sous la forme d'un conduit longitudinal se prolongeant dans le sens longitudinal dudit habitacle, sur au moins une partie de la longueur dudit habitacle.

Un tel compartiment technique permet de couvrir l'ensemble de l'habitacle de manière efficace et peut par exemple servir à connecter la partie avant de l'habitacle à la partie arrière de l'habitacle.

Le véhicule selon l'invention peut, dans un mode de réalisation nullement limitatif, comprendre plusieurs compartiments techniques supérieurs, se présentant chacun sous la forme d'un conduit longitudinal, se prolongeant dans le sens longitudinal dudit habitacle, par exemple de manière sensiblement parallèle entre eux, en particulier sur au moins une partie de la longueur dudit habitacle.

Par exemple, le véhicule selon l'invention peut comprendre un premier conduit longitudinal supérieur servant à l'aération de l'habitacle, un deuxième conduit longitudinal supérieur servant à l'éclairage, un troisième conduit longitudinal supérieur servant à l'affichage, un quatrième conduit longitudinal supérieur servant au passage de câbles électriques, etc. Au moins deux de ces conduits peuvent être parallèles entre eux et présenter la même longueur ou des longueurs différentes.

Avantageusement, au moins un compartiment technique supérieur peut comprendre des évents latéraux longitudinaux permettant le passage d'air de l'extérieur vers l'intérieur dudit véhicule.

Le véhicule selon l'invention comprend :
- deux compartiments techniques supérieurs d'aération, et
- un compartiment technique supérieur d'éclairage, positionné entre lesdits compartiments techniques supérieurs d'aération ;
lesdits compartiments se présentant chacun sous la forme d'un conduit longitudinal, se prolongeant dans le sens longitudinal dudit habitacle, en particulier de manière sensiblement parallèle entre eux.

Par ailleurs, lorsque le véhicule comprend plusieurs compartiments techniques supérieurs, au moins deux compartiments techniques supérieurs peuvent être adjacents.

Dans ce cas, au moins deux compartiments techniques supérieurs adjacents peuvent comporter une paroi commune, de sorte à alléger lesdits compartiments et diminuer le coût de réalisation desdits compartiments.

Avantageusement, le véhicule selon l'invention peut comprendre au moins une, en particulier deux, paroi(s) latérale(s) longitudinale(s) dont la partie supérieure, en particulier au niveau de la jonction avec la paroi supérieure, est au moins en partie transparente, ou comprend au moins une vitre ou claire-voie, autorisant le passage de la lumière vers l'intérieur de l'habitacle.

Ainsi, le niveau de lumière entrant dans l'habitacle est augmenté.

De plus, au moins un compartiment technique supérieur peut être pourvu d'un couvercle rotatif entre une position fermée, interdisant l'accès audit compartiment technique supérieur, et une position ouverte, autorisant l'accès audit compartiment technique supérieur.

Au moins un compartiment technique supérieur peut être pourvu d'au moins un moyen de maintien du couvercle dudit compartiment en position ouverte.

Un tel moyen de maintien peut comprendre une pièce d'appui contre laquelle le couvercle vient en appui lorsqu'il est en position ouverte.

Un tel moyen de maintien peut alternativement comprendre un moyen de retenue du couvercle de type ressort ou vérin actionné soit indépendamment de la rotation du couvercle soit lors de la rotation de couvercle.

Un tel moyen de maintien en position ouverte peut également comprendre un contrepoids adéquatement agencé sur le couvercle.

Un tel moyen de maintien permet de rendre l'intervention d'un opérateur encore plus ergonomique. En effet, le couvercle étant maintenu en position ouverte par le moyen de maintien, l'opérateur n'a pas à s'en soucier lors de son intervention.

Selon l'invention, au moins un compartiment technique peut être pourvu d'au moins un moyen de verrouillage du couvercle dudit compartiment en position fermée.

Un tel moyen de verrouillage peut être par exemple une serrure qui ne peut être verrouillée ou déverrouillée sans clef.

Un tel moyen de verrouillage permet d'interdire l'accès au compartiment technique à des personnes non autorisées.

Par ailleurs, au moins un compartiment technique supérieur peut être pourvu de plusieurs couvercles.

Dans ce cas, au moins un desdits couvercles peut être ouvert indépendamment des autres couvercles, de sorte à laisser accès à une partie dudit compartiment technique supérieur.

Par ailleurs, au moins un compartiment technique supérieur peut comprendre au moins une ouverture de passage de câble ou de fluide, ou encore une ouverture de communication avec un autre compartiment, technique ou non, se trouvant dans l'habitacle ou à l'extérieur de l'habitacle.

Selon l'invention, au moins un compartiment technique du véhicule peut être réalisé en plastique ou en métal. De même, au moins un couvercle rotatif d'au moins un compartiment technique peut être réalisé en plastique ou en métal.

Dans une version préférée, le véhicule selon l'invention peut être un bus, un car ou un tram-bus, en particulier électrique.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique partielle d'un véhicule selon l'art antérieur ;
- les FIGURES 2-4 sont des représentations schématiques partielles d'un premier exemple d'un véhicule n'appartenant pas à l'invention ;
- la FIGURE 5 est une représentation schématique partielle d'un exemple de réalisation non limitatif d'un véhicule selon l'invention ;
- les FIGURES 6-8 sont des représentations schématiques d'autres exemples d'un véhicule n'appartenant pas à l'invention ; et
- la FIGURE 9 est un exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

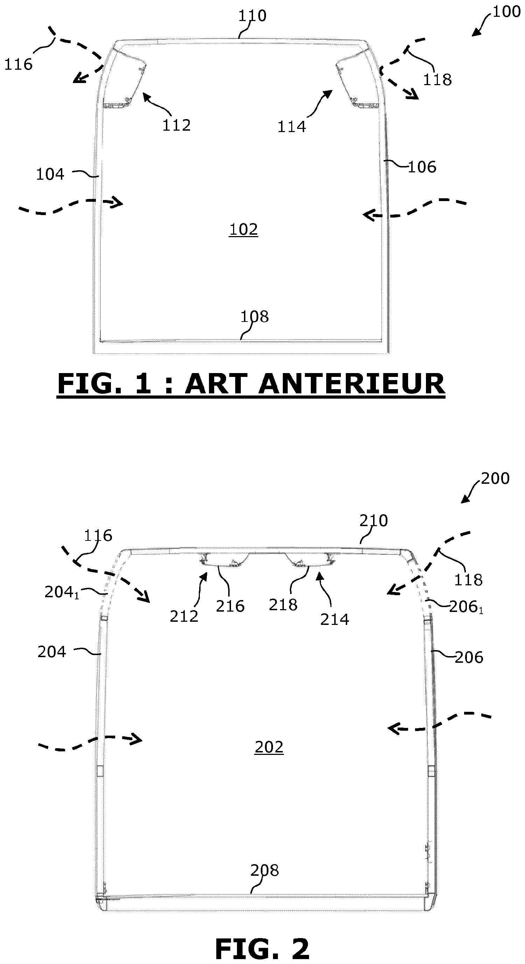

La FIGURE 1 est une représentation schématique partielle d'un exemple de réalisation d'un véhicule selon l'art antérieur.

Le véhicule 100 est représenté sur la FIGURE 1, de manière très simplifiée, suivant une vue en coupe selon un plan de coupe perpendiculaire à la direction longitudinale du véhicule, en vue de faciliter la compréhension.

Le véhicule 100 comprend un habitacle 102 délimité par deux parois latérales longitudinales 104 et 106 sensiblement verticales, une paroi inférieure 108 et une paroi supérieure 110 sensiblement horizontales. Sur la FIGURE 1, la paroi arrière, respectivement la paroi avant, délimitant l'habitacle à l'arrière, respectivement à l'avant, ne sont pas représentées.

Le véhicule 100 comprend, agencé dans l'habitacle, un compartiment technique 112 disposé au niveau d'un coin supérieur de l'habitacle 102 au niveau de la jonction entre la paroi latérale 104 et la paroi supérieure 110. Le véhicule comprend un compartiment technique 114 disposé au niveau d'un coin supérieur de l'habitacle 102 au niveau de la jonction entre la paroi latérale 106 et la paroi supérieure 110. Les compartiments techniques 112 et 114 sont opaques et constituent un obstacle à l'entrée, dans l'habitacle 102 du véhicule 100, de la lumière naturelle extérieure matérialisée par les flèches en pointillés 116 et 118.

Les FIGURES 2-4 sont des représentations schématiques partielles d'un exemple d'un véhicule n'appartenant pas à l'invention.

Le véhicule 200 selon l'invention est représenté sur la FIGURE 2 de manière très simplifiée, suivant une vue en coupe selon un plan de coupe perpendiculaire à la direction longitudinale du véhicule, en vue de faciliter la compréhension.

Le véhicule 200 comprend, à l'instar du véhicule 100 de la FIGURE 1, un habitacle 202, des parois latérales longitudinales 204 et 206, une paroi inférieure 208 et une paroi supérieure 210.

Le véhicule 200 de la FIGURE 2 comprend en outre deux compartiments techniques 212 et 214, similaires ou identiques aux compartiments techniques 112 et 114 du véhicule 100 de la FIGURE 1.

À la différence du véhicule 100 de la FIGURE 1, dans le véhicule 200 de la FIGURE 2, les compartiments techniques 212 et 214 sont disposés sur la paroi supérieure 210 de l'habitacle 202, au niveau d'une zone centrale de ladite paroi supérieure 210.

Par conséquent, le coin supérieur de l'habitacle 202, au niveau de la jonction entre la paroi latérale 204 et la paroi supérieure 210, est libéré et la lumière naturelle matérialisée par la flèche 116 peut entrer dans l'habitacle 202 par une vitre ou une claire-voie 204₁ (représentée en pointillés sur la FIGURE 2) aménagée au niveau de la partie haute de la paroi latérale 204. De même, le coin supérieur de l'habitacle 202, au niveau de la jonction entre la paroi latérale 206 et la paroi supérieure 210, est libéré et la lumière naturelle matérialisée par la flèche 118 peut entrer dans l'habitacle 202 par une vitre ou une claire-voie 206₁ (représentée en pointillés sur la FIGURE 2) aménagée au niveau de la partie haute de la paroi latérale 206. Cette solution permet ainsi d'augmenter le nombre de baies lumineuses donnant au véhicule un accès pour la lumière extérieure. Notamment, le niveau de luminosité dans l'habitacle 202 du véhicule 200 est amélioré par rapport au niveau de luminosité de l'habitacle 102 du véhicule 100, puisqu'il reçoit une lumière quasi verticale en provenance de l'extérieur donc plus efficace pour la luminosité de l'habitacle, en plus des rayons lumineux quasi horizontaux (représentés également par des flèches en pointillés sur la FIGURE 2) sur les vitres verticales des parois du véhicule.

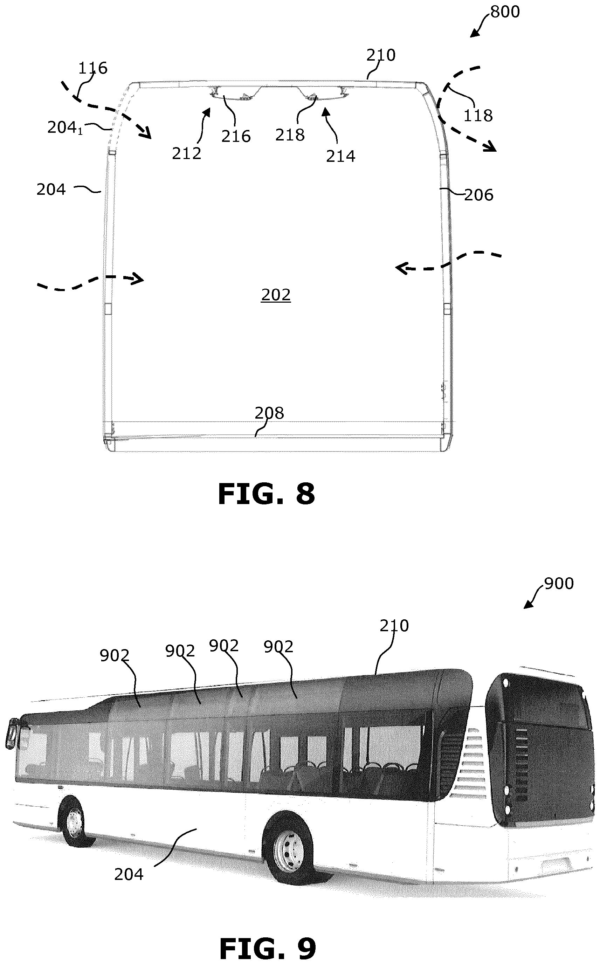

Bien entendu, alternativement, seul un des coins supérieurs de l'habitacle peut comprendre une claire voie et l'autre coin supérieur peut comporter un compartiment technique classique, n'autorisant pas le passage de la lumière extérieure. La FIGURE 8 donne une représentation schématique d'un véhicule 800 suivant cette alternative.

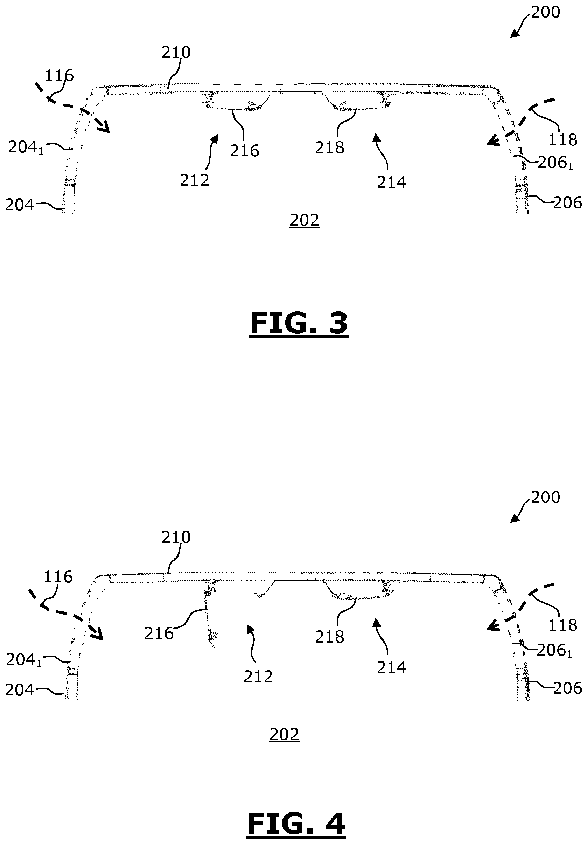

Les FIGURES 3 et 4 donnent des représentations schématiques de la paroi supérieure 210 du véhicule 200 de la FIGURE 2 munie de compartiments techniques.

Chaque compartiment technique 212-214 se présente sous la forme d'un conduit longitudinal aménagé sur la paroi supérieure 210, au niveau d'une zone centrale de ladite paroi supérieure 210. Chaque conduit technique longitudinal 212-214 se prolonge de manière sensiblement horizontale, sur au moins une partie de, en particulier sur toute, la longueur de la paroi supérieure 210.

Chaque conduit technique 212-214 est pourvu d'un couvercle, respectivement 216 et 218. Chaque couvercle 216-218 est prévu rotatif autour d'un axe horizontal longitudinal entre une position fermée, interdisant l'accès à l'intérieur du conduit technique 212-214, et une position ouverte, autorisant l'accès à l'intérieur du conduit technique 212-214.

La FIGURE 3 est une représentation schématique des conduits techniques 212-214 du véhicule 200 de la FIGURE 2 avec les couvercles 216-218 des conduits 212-214 en position fermée.

La FIGURE 4 est une représentation schématique des conduits techniques 212-214 du véhicule 200 de la FIGURE 2 avec le couvercle 216 du conduit 212 en position ouverte et le couvercle 218 du conduit technique 214 en position fermée.

Chaque conduit technique 212-214 comprend une serrure permettant de verrouiller le couvercle 216-218 dudit conduit 212-214 en position fermée contre le reste du conduit technique 212-214.

Chaque conduit technique 212-214 comprend en outre un moyen de maintien (non représenté) du couvercle 216-218 dudit conduit 212-214 en position ouverte. Un tel moyen de maintien en position ouverte du couvercle comprend une combinaison quelconque des éléments suivants : un vérin, un ressort, un contrepoids ou une pièce de butée.

On rappelle que chaque conduit technique est représenté vide sur les FIGURES pour faciliter la compréhension et ne pas surcharger les FIGURES.

De plus, chaque conduit technique d'un véhicule selon l'invention peut être utilisé pour un passage de câbles ou de tuyaux, pour véhiculer un fluide tel que de l'air conditionné, pour abriter un moyen d'affichage et/ou un moyen d'éclairage, etc.

Dans l'exemple donné sur les FIGURE 2-4, les conduits techniques supérieurs 212-214 peuvent être utilisés pour l'aération au sein de l'habitacle 202 du véhicule 200.

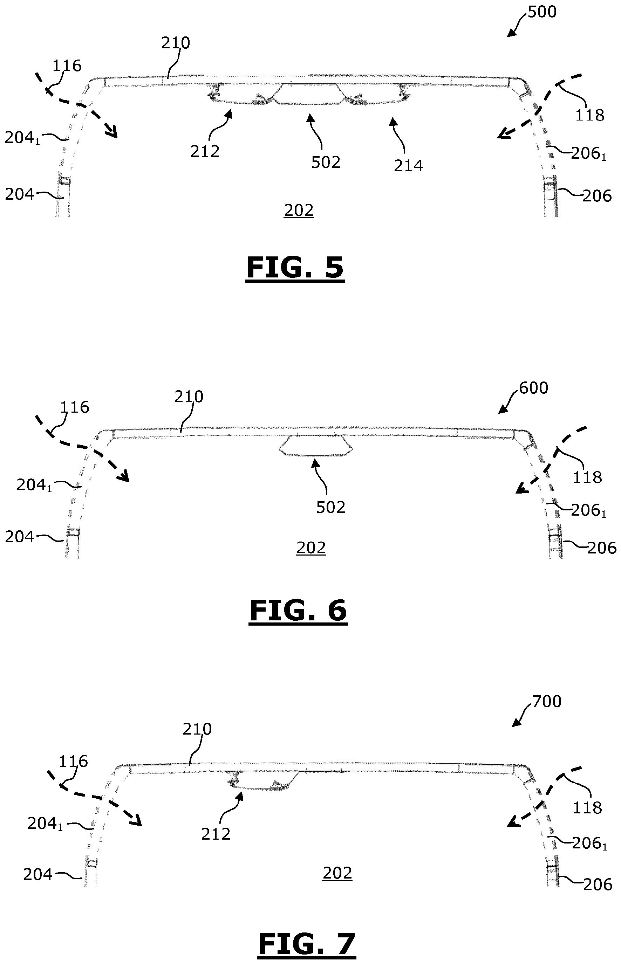

De plus le nombre et la disposition des conduits techniques supérieurs sur la paroi supérieure 210 ne se limite pas à ce qui vient d'être décrit en référence aux FIGURES 2-4. Les FIGURES 5-7 donnent d'autres exemples de réalisation.

La FIGURE 5 est une représentation schématique partielle d'un exemple de réalisation d'un véhicule selon l'invention.

Plus précisément, la FIGURE 5 donne une représentation partielle de la paroi supérieure d'un véhicule 500 selon l'invention.

Le véhicule 500 comprend tous les éléments du véhicule 200 des FIGURES 2-4.

En plus, le véhicule 500 comprend un conduit technique supérieur longitudinal 502 disposé entre les conduits techniques 212 et 214.

Le conduit technique supérieur longitudinal 502 est agencé entre les conduits techniques 212 et 214 de sorte que les trois conduits 502, 212 et 214 sont adjacents. De plus, les conduits adjacents 502 et 212 comportent une paroi latérale commune. Les conduits 502 et 214 comportent aussi une paroi latérale commune.

Le conduit 502 peut être similaire ou identique, ou encore différent des conduits 212 et 214.

Dans l'exemple représenté sur la FIGURE 5, le conduit technique 502 est un conduit servant à l'éclairage de l'habitacle et les conduits 212-214 sont utilisés pour l'aération au sein de l'habitacle du véhicule 500.

Suivant un exemple de réalisation, le conduit 502 peut être utilisé pour abriter un éclairage artificiel de l'habitacle 202, par exemple un éclairage électrique réalisé par LED. Alternativement ou en plus, le conduit 502 peut être utilisé pour laisser entrer un éclairage naturel dans l'habitacle 202, en combinaison avec un toit, au moins en partie, transparent.

La FIGURE 6 est une représentation schématique partielle d'un autre exemple de réalisation d'un véhicule n'appartenant pas à l'invention.

Plus précisément, la FIGURE 6 donne une représentation partielle de la paroi supérieure d'un véhicule 600 selon l'invention.

Dans l'exemple représenté sur la FIGURE 6, le véhicule 600 comprend uniquement le conduit technique supérieur 502 du véhicule 500 de la

FIGURE 5. Le véhicule 600 ne comprend pas les conduits techniques 212 et 214.

La FIGURE 7 est une représentation schématique partielle d'un autre exemple de réalisation d'un véhicule n'appartenant pas à l'invention.

Plus précisément, la FIGURE 7 donne une représentation partielle de la paroi supérieure d'un véhicule 700 selon l'invention.

Dans l'exemple représenté sur la FIGURE 7, le véhicule 700 comprend uniquement le conduit technique supérieur 212 du véhicule 500 de la

FIGURE 5. Le véhicule 700 ne comprend pas les conduits techniques 214 et 502.

La FIGURE 8 est une représentation schématique d'un autre exemple de réalisation n'appartenant pas à l'invention.

Pus précisément, La FIGURE 8 donne une représentation partielle de la paroi supérieure d'un véhicule 700 selon l'invention.

La FIGURE 9 est une représentation schématique d'un exemple de réalisation d'un véhicule selon l'invention, vu de l'extérieur de l'habitacle dudit véhicule.

Le véhicule 900 représenté sur la FIGURE 9 est un bus, qui comporte des vitres transparentes 902 à la jonction entre la paroi latérale 204 et la paroi supérieure 210, autorisant le passage de la lumière de l'extérieur vers l'intérieur dudit bus 900.

Les vitres 902 sont disposées sur une partie uniquement du bus 900, et plus particulièrement au niveau d'une zone centrale bus 900.

Selon l'invention, au moins un compartiment technique du véhicule selon l'invention peut être réalisé en plastique ou en métal. De même, au moins un couvercle rotatif d'au moins un compartiment technique peut être réalisé en plastique ou en métal.

Bien entendu, l'invention n'est pas limitée aux exemples détaillés ci-dessus. Le véhicule selon l'invention peut comprendre au moins un compartiment technique additionnel différent du ou des compartiments techniques supérieurs qui viennent d'être décrits.

## Revendications

1. Véhicule (500;900) terrestre de transport en commun, en particulier de type bus, comprenant un habitacle (202) prévu pour accueillir plusieurs personnes assises ou debout dans un couloir et plusieurs compartiments techniques (212,214,502), dits supérieurs, accessibles depuis ledit habitacle (202), agencés sur/dans la paroi supérieure (210) dudit habitacle (202) et se présentant chacun sous la forme d'un conduit longitudinal ;
**caractérisé en ce qu'**il comprend :
- deux compartiments techniques supérieurs d'aération (212,214), et
- un compartiment technique supérieur d'éclairage (502), positionné entre lesdits compartiments techniques supérieurs d'aération (212,214).

2. Véhicule (500900) selon la revendication 1, **caractérisé en ce qu'**au moins un compartiment technique supérieur (212,214,502) est agencé au niveau d'une zone centrale de la paroi supérieure (210).

3. Véhicule (500;900) selon l'une quelconque des revendications précédentes, **caractérisé en ce qu'**au moins un compartiment technique supérieur (212,214,502) se présente sous la forme d'un conduit longitudinal se prolongeant dans le sens longitudinal dudit habitacle (202), sur au moins une partie de la longueur dudit habitacle (202).

4. Véhicule (500;900) selon l'une quelconque des revendications précédentes, **caractérisé en ce qu'**il comprend en outre au moins un compartiment technique supérieur :
- d'affichage, et/ou
- de passage de tuyaux ou de câbles électriques.

5. Véhicule selon l'une quelconque des revendications précédentes, **caractérisé en ce qu'**au moins un compartiment technique supérieur comprend des évents latéraux longitudinaux permettant le passage d'air de l'extérieur vers l'intérieur dudit véhicule.

6. Véhicule (500) selon l'une quelconque des revendications précédentes, **caractérisé en ce qu'**il comprend au moins deux compartiments supérieurs adjacents (212,214,502), comportant une paroi commune.

7. Véhicule (500;900) selon l'une quelconque des revendications précédentes, **caractérisé en ce qu'**il comprend au moins une, en particulier deux, paroi(s) latérale(s) longitudinale(s) (204,206) dont la partie supérieure (204₁,206₁), en particulier au niveau de la jonction avec la paroi supérieure (210), est au moins en partie transparente, ou comprend au moins une vitre ou claire-voie, autorisant le passage de la lumière vers l'intérieur de l'habitacle (202).

8. Véhicule (500;900) selon l'une quelconque des revendications précédentes, **caractérisé en ce qu'**au moins un compartiment technique supérieur (212,214) est pourvu d'un couvercle (216,218) rotatif entre une position fermée, interdisant l'accès audit compartiment technique supérieur (212,214), et une position ouverte, autorisant l'accès audit compartiment technique supérieur (212,214).

9. Véhicule (500;900) selon la revendication précédente, **caractérisé en ce qu'**au moins un compartiment technique supérieur (212,214,502) est pourvu d'au moins un moyen de maintien du couvercle dudit compartiment en position ouverte.

10. Véhicule (500;900) selon l'une quelconque des revendications 8 ou 9, **caractérisé en ce qu'**au moins un compartiment technique supérieur (212,214,502) est pourvu d'au moins un moyen de verrouillage du couvercle dudit compartiment en position fermée.

11. Véhicule (500;900) selon l'une quelconque des revendications précédentes, **caractérisé en ce qu'**au moins un compartiment technique supérieur (212,214,502) est pourvu de plusieurs couvercles, l'un au moins desdits couvercles pouvant être ouvert indépendamment des autres couvercles.

12. Véhicule (500;900) selon l'une quelconque des revendications précédentes, **caractérisé en ce qu'**au moins un compartiment technique supérieur (212,214,502) comprend au moins une ouverture de passage de câble ou de fluide, ou encore une ouverture de communication avec un autre compartiment, technique ou non, se trouvant dans l'habitacle (202) ou à l'extérieur de l'habitacle (202).

13. Véhicule (500;900) selon l'une quelconque des revendications précédentes, **caractérisé en ce qu'**au moins un compartiment technique supérieur (212,214,502) est réalisé en plastique ou en métal.

14. Véhicule (500;900) selon l'une quelconque des revendications précédentes, **caractérisé en ce qu'**il s'agit d'un bus, car ou tram-bus, en particulier électrique.

## Patentansprüche

1. Landfahrzeug (500; 900) für den öffentlichen Verkehr, insbesondere ein Bus, umfassend einen Innenraum (202) zur Aufnahme mehrerer sitzenden oder in einem Gang stehenden Personen sowie mehrere technische, sogenannte Oberräume (212, 214, 502), welche von dem Innenraum (202) aus zugänglich sind, an/in der oberen Wand (210) des Innenraums (202) angeordnet und jeweils als Längsschacht ausgebildet sind;
**dadurch gekennzeichnet, dass** es außerdem umfasst:
- zwei technische Oberräume für die Belüftung (212, 214), und
- einen technischen Oberraum für die Beleuchtung (502), welcher zwischen den technischen Belüftungs-Oberräumen (212, 214) gelagert ist.

2. Fahrzeug (500; 900) nach Anspruch 1, **dadurch gekennzeichnet, dass** wenigstens ein technischer Oberraum (212, 214, 502) in einem Mittelbereich der oberen Wand (210) angeordnet ist.

3. Fahrzeug (500; 900) nach einem der vorhergehenden Ansprüche, **dadurch gekennzeichnet, dass** wenigstens ein technischer Oberraum (212, 214, 502) als Längsschacht ausgebildet ist, welcher in Längsrichtung des Innenraums (202) auf mindestens einem Teil der Länge des Innenraums (202) verläuft.

4. Fahrzeug (500; 900) nach einem der vorhergehenden Ansprüche, **dadurch gekennzeichnet, dass** es außerdem mindestens einen technischen Oberraum umfasst:
- für die Anzeige, und/oder
- als Durchgang für Rohre oder Elektrokabel.

5. Fahrzeug nach einem der vorhergehenden Ansprüche, **dadurch gekennzeichnet, dass** wenigstens ein technischer Oberraum seitliche, sich in Längsrichtung erstreckende Entlüftungslöcher umfasst, welche einströmende Luft von draußen ins Innere des Fahrzeugs durchlassen.

6. Fahrzeug (500) nach einem der vorhergehenden Ansprüche, **dadurch gekennzeichnet, dass** es wenigstens zwei benachbarte Oberräume (212, 214, 502) umfasst, welche eine gemeinsame Trennwand beinhalten.

7. Fahrzeug (500; 900) nach einem der vorhergehenden Ansprüche, **dadurch gekennzeichnet, dass** es wenigstens eine, insbesondere zwei seitliche Längswände (204, 206) umfasst, deren Oberbereich (204₁, 206₁) insbesondere an der Verbindung mit der Oberwand (210) mindestens teilweise durchsichtig ist oder mindestens eine Fensterscheibe oder ein Oberlicht umfasst, wodurch Licht ins Innere des Innenraums (202) gelangen kann.

8. Fahrzeug (500; 900) nach einem der vorhergehenden Ansprüche, **dadurch gekennzeichnet, dass** wenigstens ein technischer Oberraum (212, 214) mit einer Abdeckung (216, 218) versehen ist, die zwischen einer geschlossenen, den Zugang zum technischen Oberraum (212, 214) versperrenden Position und einer geöffneten, den Zugang zum technischen Oberraum (212, 214) freigebenden Position drehbar gelagert ist.

9. Fahrzeug (500; 900) nach dem vorhergehenden Anspruch, **dadurch gekennzeichnet, dass** wenigstens ein technischer Oberraum (212, 214, 502) mit mindestens einer Vorrichtung zum Halten der Abdeckung des Oberraums in geöffneter Position versehen ist.

10. Fahrzeug (500; 900) nach einem der Ansprüche 8 oder 9, **dadurch gekennzeichnet, dass** wenigstens ein technischer Oberraum (212, 214, 502) mit mindestens einer Vorrichtung zur Verriegelung der Abdeckung des Oberraums in geschlossener Position versehen ist.

11. Fahrzeug (500; 900) nach einem der vorhergehenden Ansprüche, **dadurch gekennzeichnet, dass** wenigstens ein technischer Oberraum (212, 214, 502) mit mehreren Abdeckungen versehen ist, wobei mindestens eine der Abdeckungen unabhängig von den anderen Abdeckungen geöffnet werden kann.

12. Fahrzeug (500; 900) nach einem der vorhergehenden Ansprüche, **dadurch gekennzeichnet, dass** wenigstens ein technischer Oberraum (212, 214, 502) mindestens eine Durchlassöffnung für Kabel oder Fluid umfasst, oder eine Öffnung zum Durchgang zu einem anderen, technischen oder nicht technischen Raum, welcher in dem Innenraum (202) oder außerhalb des Innenraums (202) gelagert ist.

13. Fahrzeug (500; 900) nach einem der vorhergehenden Ansprüche, **dadurch gekennzeichnet, dass** mindestens ein technischer Oberraum (212, 214, 502) aus Kunststoff oder Metall ausgebildet ist.

14. Fahrzeug (500; 900) nach einem der vorhergehenden Ansprüche, **dadurch gekennzeichnet, dass** es sich um einen, insbesondere elektrischen, Bus, Reisebus oder Straßenbahn-Bus handelt.

## Claims

1. A public transport land vehicle (500;900), in particular of the bus type, comprising a passenger compartment (202) intended to accommodate several people seated or standing in an aisle and several technical compartments (212,214,502), called upper compartments, which can be accessed from said passenger compartment (202), arranged on/in the upper wall (210) of said passenger compartment (202) and each having the form of a longitudinal conduit;
**characterized in that** it comprises:
- two upper technical compartments for ventilation (212,214), and
- an upper technical compartment for lighting (502), positioned between said upper technical compartments for ventilation (212, 214).

2. The vehicle (500;900) according to claim 1, **characterized in that** at least one upper technical compartment (212,214,502) is arranged in a central area of the upper wall (210).

3. The vehicle (200;900) according to any one of the preceding claims, **characterized in that** at least one upper technical compartment (212,214,502) has the form of a longitudinal conduit extending in the longitudinal direction of said passenger compartment (202), over at least a part of the length of said passenger compartment (202).

4. The vehicle (200;900) according to any one of the preceding claims, **characterized in that** it also comprises at least one upper technical compartment for:
- display, and/or
- housing pipes or electrical cables.

5. The vehicle according to any one of the preceding claims, **characterized in that** at least one upper technical compartment comprises longitudinal side vents which make it possible for air to pass from the outside to the inside of said vehicle.

6. The vehicle (500) according to any one of the preceding claims, **characterized in that** it comprises at least two adjacent upper compartments (212,214,502), containing a common wall.

7. The vehicle (500;900) according to any one of the preceding claims, **characterized in that** it comprises at least one, in particular two, longitudinal side wall(s) (204,206) the upper part of which (204₁,206₁), in particular at the join with the upper wall (210), is at least partially transparent, or comprises at least one window or skylight allowing light to pass to the inside of the passenger compartment (202).

8. The vehicle (500;900) according to any one of the preceding claims, **characterized in that** at least one upper technical compartment (212,214) is provided with a cover (216,218) which rotates between a closed position, preventing access to said upper technical compartment (212,214), and an open position, allowing access to said upper technical compartment (212, 214).

9. The vehicle (500;900) according to the preceding claim, **characterized in that** at least one upper technical compartment (212,214,502) is provided with at least one means of holding the cover of said compartment in an open position.

10. The vehicle (500;900) according to any one of claims 8 or 9, **characterized in that** at least one upper technical compartment (212,214, 502) is provided with at least one means for locking the cover of said compartment in a closed position.

11. The vehicle (500;900) according to any one of the preceding claims, **characterized in that** at least one upper technical compartment (212,214,502) is provided with several covers, at least one of said covers being able to be opened independently of the other covers.

12. The vehicle (500;900) according to any one of the preceding claims, **characterized in that** at least one upper technical compartment (212,214,502) comprises at least one opening for a cable or fluid to pass through, or also an opening for communicating with another compartment, technical or otherwise, located in the passenger compartment (202) or outside the passenger compartment (202).

13. The vehicle (500;900) according to any one of the preceding claims, **characterized in that** at least one upper technical compartment (212,214,502) is made from plastic or from metal.

14. The vehicle (500;900) according to any one of the preceding claims, **characterized in that** it is a bus, coach or tyred tram, in particular electric.
